# EUROPÄISCHE PATENTSCHRIFT

(11) **EP 1 993 963 B1**
(45) Veröffentlichungstag und Bekanntmachung des Hinweises auf die Patenterteilung: **02.11.2016**
(21) Anmeldenummer: 07722051.5
(22) Anmeldetag: 14.03.2007
(51) Int. Cl.: C03C 13/04

(54) **GLASFASERKABEL**
FIBER-OPTIC CABLE
CÂBLE EN FIBRES DE VERRE

(30) Priorität: 14.03.2006 DE 102006012116
(43) Veröffentlichungstag der Anmeldung: 26.11.2008
(73) Patentinhaber: Schott AG, 55122 Mainz (DE)
(72) Erfinder: CURDT, Axel, 65388 Schlangenbad (DE); WILLMES, Lothar, 65375 Hallgarten/Rheingau (DE); EIS, Wolfgang, 65527 Oberjosbach (DE); KAPPEL, Markus, 55595 Roxheim (DE); WEINGÄRTNER, Thomas, 55435 Gau-Algesheim (DE); HEINRICH, Thomas, 61449 Steinbach/Ts. (DE); GEHENN, Wolfram, 55126 Mainz (DE); KOLBERG, Uwe, 55130 Mainz (DE)
(74) Vertreter: Schweiger, Martin
(86) Internationale Anmeldenummer: PCT/DE2007/000486
(87) Internationale Veröffentlichungsnummer: WO 2007/104300

(56) Entgegenhaltungen:
- EP-A- 1 405 834
- EP-A1- 1 468 972
- US-A- 3 607 322
- US-A- 4 264 131
- US-A- 4 573 762

## Beschreibung

Die vorliegende Erfindung betrifft optische Stufenfasern aus Mehrkomponentenglas mit einem Lanthan-haltigen beziehungsweise einem Lanthan-freien Kernglas und einem das Kernglas vollständig an seiner Umfangswand umschließenden Mantelglas. Des Weiteren betrifft die Erfindung ein Glasfaserkabel zur Leitung von elektromagnetischer Strahlung mit wenigstens einem Bündel von Einzelfasern, wobei die Einzelfasern optische Stufenfasern aus Mehrkomponentenglas mit einem Kernglas und einem das Kernglas vollständig an seiner Umfangswand umschließenden Mantelglas umfassen.

Zur Datenübertragung sind im Stand der Technik Lichtleiter aus Kunststofffasern bekannt. Diese werden in sogenannten MOST-Bus-Systemen eingesetzt. Kunststofffasern weisen den Nachteil auf, dass die Alterungsbeständigkeit bei den üblichen Betriebstemperaturen gering ist. Insbesondere, wenn die Lichtleiter in einer Umgebung mit hoher Konzentration von aggressiv wirkenden Chemikalien längere Zeit eingesetzt sind, wird die Oberfläche aber auch die innere Beschaffenheit der Kunststofffasern nachteilig verändert. Hiermit geht eine unerwünschte Verschlechterung der optischen Eigenschaften einher, so dass die erhöhten Anforderungen an Transmissionseigenschaften für die Datenübertragungen bei Kunststofffasern dauerhaft nicht gewährleistet sind.

Des Weiteren unterliegen die Kunststofffasern einer unerwünschten Degradation durch das Klima ihrer Umgebung. Kabel aus Kunststofffasern werden üblicherweise bei Anwendungstemperaturen von -40°C bis +85°C eingesetzt. Insbesondere beim Einsatz in Kraftfahrzeugen oder Flugzeugen kommt es dabei zu Alterungserscheinungen, welche durch sich häufig ändernde Temperaturen am Einsatzort verstärkt werden.

In einigen Bereichen eines Kraftfahrzeugs ist eine Temperaturbeständigkeit der Kabel von mindestens 125°C im Innenraum beziehungsweise von mindestens 150°C im Motorraum erforderlich. In diesen Bereichen weisen Kabel aus Kunststofffasern erhebliche Nachteile auf, so dass von einer Verwendung dort abgesehen wird.

Datenkabel aus Kunststoff, welche als Einzelfaserkabel ausgebildet sind, weisen zudem aufgrund des großen Faserdurchmessers große Biegeradien auf. Bei Unterschreitung des Mindest-Biegeradius kommt es zur Lichtauskopplung und damit zu einer Unterbrechung der Datenleitung.

Des Weiteren sind Glasfaserkabel mit einem extrudierten Kunststoffmantel für Beleuchtungszwecke bekannt. Diese Kabel weisen Nachteile bezüglich chemischer, thermischer und mechanischer Beständigkeit auf, welche für die Gewährleistung einer dauerhaft optimalen Datenübertragung erforderlich ist.

Als geeignete Glasfasern haben sich optische Stufenfasern aus Mehrkomponentengläsern erwiesen, wobei Stufenfasern ein Kernglas und ein das Kernglas vollständig an seiner Umfangswand umschließendes Mantelglas umfassen.

Im Allgemeinen ist eine Glasfaser zur Lichtübertragung aus einem hochbrechenden Kernglas und einem dieses umgebendes Mantelglas mit niedrigerer Brechzahl als der des Kernglases aufgebaut. Ein lichtübertragender Glaskörper in Faserform, bei dem über den Querschnitt des Kernglases die Brechzahl konstant ist und der mit einem beschriebenen Mantelglas umhüllt ist, nennt man Stufenfaser.

Glasfasern dieses Typs übertragen Licht, das in das eine Ende der Faser eingekoppelt wird, an das andere Ende der Faser, wobei das Licht an der Grenzfläche zwischen Kernglas und Mantelglas vollständig reflektiert wird (Totalreflexion).

Die Lichtmenge, die in eine solche Faser eingekoppelt und übertragen werden kann, ist proportional dem Quadrat der Numerischen Apertur (NA) der Faser und der Querschnittsfläche des Faserkerns. Um möglichst große Lichtmengen über kurze bis mittlere Entfernungen (<100 m) zu übertragen, werden solche Stufenfasern zu dichten Faserbündeln zusammengepackt, mit einem Schutzschlauch versehen, ihre Enden in Metallhülsen oder in Hülsen eines anderen geeigneten Materials eingefasst und die Stirnseiten durch Schleifen und Polieren zu optisch planen Flächen bearbeitet. Entsprechend konfektionierte optische Faserbündel nennt man faseroptische Lichtleiter.

Diese faseroptischen Lichtleiter finden in den unterschiedlichsten technischen und medizinischen Bereichen Anwendung (allgemeine Industrietechnik, Beleuchtungs-, Verkehrstechnik, Automobilindustrie, Architektur, Endoskopie, Dentalmedizin). Ihre wichtigste Funktion ist die Übertragung eines möglichst großen Lichtstroms.

Je höher die NA der in dem Bündel enthaltenden Einzelfasen ist, desto größere Lichtmengen können diese Lichtleiter übertragen. Die durch faseroptische Lichtleiter übertragene Lichtmenge hängt neben der NA ihrer Fasern auch ab von der Transmissionseigenschaft der Kerngläser. Nur Kerngläser ganz bestimmter spezifischer Zusammensetzung und mit sehr niedrigen Verunreinigungsgraden der Rohstoffe, aus denen sie geschmolzen werden, leiten das Licht möglichst dämpfungsarm über die gesamte Lichtleiterlänge.

Die Rohstoffe zum Erschmelzen solcher Kerngläser sind aufgrund ihrer hohen Reinheit recht teuer, was zu erheblichen Herstellkosten solcher Fasern bzw. daraus hergestellter Lichtleiter führen kann.

Die Herstellung optischer Stufenfasern aus Mehrkomponentengläsern erfolgt entweder über das sogenannte Doppeltiegel- oder das Stab-Rohr-Verfahren. In beiden Fällen werden Kern- und Mantelglas auf Temperaturen erhitzt, die einem Viskositätsbereich zwischen 10⁴ bis 10³ dPa s entsprechen und dabei zu einer Faser ausgezogen. Damit eine stabile Faser niedriger Dämpfung hergestellt werden kann, müssen Kern- und Mantelglas in einer Reihe von Eigenschaften wie Viskositätsverlauf, thermischer Ausdehnung, Kristallisationsneigung u.a.m. kompatibel zueinander sein. Insbesondere darf es in der Grenzfläche zwischen Faserkern und -mantel nicht zu Kontaktreaktion bzw. Kristallisation kommen, was eine Totalreflexion des im Faserkern geführten Lichtes empfindlich stören und damit die Faser für die Anwendung zur dämpfungsarmen Lichtübertragung untauglich machen würde. Darüber hinaus würde auch die mechanische Festigkeit der Faser durch Kristallisation negativ beeinträchtigt.

Optische Gläser für Stufenfasern sind aus der DE 199 58 522 B4 und Stufenfasern sind aus der DE 102 45 987 B3, EP 1 405 834 A2 sowie der EP 1 468 972 A1 bekannt. In der DE 199 58 522 B4 werden zinkhaltige optische Gläser beschrieben mit Brechzahlen n_{d} zwischen 1,52 und 1,66. Neben SiO₂ enthalten diese Gläser zumeist auch ZnO in unterschiedlichen Prozentsätzen sowie hauptsächlich Alkalien und einige wenige andere Elemente wie B, Ba, Mg, Ca, Al, Y, Zr, Ge und teilweise Pb, beziehungsweise deren Oxide. Die EP 1 405 834 A2 sowie die EP 1 468 972 A1 beschreiben besondere Glaskombinationen von Kern- und Mantelgläsern, welche Pb enthaltende und geringe SiO₂ Anteile aufweisende Kernglaszusammensetzungen umfassen.

Die meisten der dort offenbarten Gläser zeichnen sich durch eine hohe Reintransmission und gute Farbneutralität aus. Neben diesen optischen Eigenschaften weisen die Gläser auch eine gute Kristallisationsstabilität und Schmelzbarkeit auf. Obwohl zinkhaltige optische Gläser stärker zu Kristallisation neigen als bleihaltige, konnten aus dem in der DE 199 58 522 B4 zugrunde liegendem Glassystem Gläser gefunden werden, die zur Herstellung von erfindungsgemäß verwendeten Stufenfasern geeignet sind.

Stufenfasern aus den oben beschriebenen Gläsern beziehungsweise Glasfaserbündel aus diesen Stufenfasern weisen die Eigenschaft auf, dass sie auf bestimmte Umgebungschemikalien empfindlich reagieren. Insbesondere werden aus der Oberfläche der Stufenfasern von Radikalen leicht Bestandteile von chemischen Verbindungen an der Glasoberfläche gelöst, so dass die optischen Eigenschaften der Stufenfasern nicht mehr gewährleistet sind.

Diese radikalen Umgebungschemikalien kommen unter anderem in Kraftfahrzeugen vor, an beziehungsweise in denen eine Vielzahl unterschiedlicher Materialen verarbeitet sind, welche eine große Anzahl an derartigen Radikalen an die Umgebung abgeben. Aber auch die Materialien, welche zur Ummantelung von Bündeln aus derartigen Stufenfasern verwendet werden, können selbst aggressive radikale Elemente beziehungsweise Verbindungen freisetzen, welche unmittelbar an die Oberfläche der Stufenfasern gelangen können.

Aufgabe der Erfindung ist es, ein Glasfaserkabel zur Verfügung zu stellen, welches den Anforderungen für den Einsatz in Kraftfahrzeugen gerecht wird. Dabei ist einerseits von besonderer Bedeutung, dass die Stufenfasern für die Datenübertragung hohe Transmissionsfähigkeit aufweisen. Andererseits ist erforderlich, dass die Transmissionseigenschaften während der typischen Lebensdauer- beziehungsweise Gesamtnutzungszeit von Kraftfahrzeugen in ausreichendem Maße erhalten bleiben. Dabei soll das Glasfaserkabel gegenüber physikalischen und chemischen Einflüssen der Umgebung beständig sein und vor radikalen Umgebungschemikalien geschützt sein.

Eine erfindungsgemäße Lösung der Aufgabe wird durch die Merkmale des Anspruchs 1 bereitgestellt. Weiterbildungen und Ausführungsformen der Erfindung werden durch die Merkmale der Unteransprüche bereitgestellt.

Die Aufgabe wird erfindungsgemäß dadurch gelöst, dass das Kernglas der Stufenfasern eine Materialzusammensetzung aufweist mit SiO₂ von 42 bis 60 Gew.%, ZnO von 20 bis 38 Gew.%, Na₂O < 14 Gew.%, K₂O < 12 Gew.%, Na₂O+K₂O ≥ 2 Gew.%, La₂O₃ von > 0 bis 10 Gew.%, BaO < 0,9 Gew.% und gegebenenfalls Läutermittel in den üblichen Mengen, und das Mantelglas der Stufenfasern eine Materialzusammensetzung aufweist mit SiO₂ von 60-72 Gew.%, B₂O₃ < 20 Gew.%, Al₂O₃ <10 Gew.%, Na₂O < 18 Gew.%, K₂O < 15 Gew.%, Li₂O < 5 Gew.%, vorzugsweise < 2 Gew.%, F ≤ 1 Gew.%, vorzugsweise < 0,02 Gew.% und gegebenenfalls Läutermittel in den üblichen Mengen.

Eine bevorzugte Ausführungsform weist Li₂O < 2 Gew.%, F ≤ < 0,02 Gew.% auf.

In vorteilhafter Weise wird so ein Glasfaserkabel bereitgestellt, welches optimale optische Eigenschaften sowie dauerhafte Beständigkeit eines Glasfaserbündels gewährleistet. Insbesondere beim Einsatz in Kraftfahrzeugen wird so die für die Datenübertragung erforderliche Lichtleitfähigkeit dauerhaft erhalten. Es werden erfindungsgemäß bereits durch die Wahl der Glaszusammensetzung bei der Herstellung der Stufenfasern, beim Faserziehen, zwischen Mantelglas und Kernglas Kristallisations- und Grenzflächenreaktionen vermieden, wodurch optimale optische Eigenschaften der Einzelfasern erreicht werden. Durch das erfindungsgemäße Mantelglas werden des Weiteren Wechselwirkungen zwischen Mantelglas und Kunststoffummantelungen bei in eine Glasfaserbündel vermieden, welche einen unerwünschten Einfluss auf die Haltbarkeit und somit auch auf die optischen Eigenschaften des Glasfaserkabels haben könnten. Insbesondere wird dadurch die Haltbarkeit des Glases gegenüber Korrosion oder Erosion aufgrund Beaufschlagung mit Umgebungschemikalien beim Einsatz gewährleistet.

Eine vorteilhafte Variante der Stufenfaser ist erfindungsgemäß dadurch gefunden worden, dass das Kernglas der Stufenfasern eine Materialzusammensetzung aufweist mit SiO₂ von 47 bis 51 Gew.%, ZnO von 25 bis 33 Gew.%, Na₂O < 10 Gew.%, K₂O < 8 Gew.%, Na₂O+K₂O ≥ 2 Gew.%, La₂O₃ von 3 bis 5 Gew.%, BaO < 0,9 Gew.% und gegebenenfalls Läutermittel in den üblichen Mengen.

Alternativ wird mit der Erfindung eine optische Stufenfasern aus Mehrkomponentenglas mit einem Lanthan-freien Kernglas und einem das Kernglas vollständig an seiner Umfangswand umschließenden Mantelglas vorgeschlagen, wobei das Kernglas der Stufenfasern eine Materialzusammensetzung aufweist mit SiO₂ von > 53 bis 60 Gew.%, ZnO von 20 bis 38 Gew.%, Na₂O < 14 Gew.%, K₂O < 12 Gew.%, Na₂O+K₂O ≥ 2 Gew.%, BaO < 0,9 Gew.% und gegebenenfalls Läutermittel in den üblichen Mengen, und das Mantelglas der Stufenfasern eine Materialzusammensetzung aufweist mit SiO₂ von 60-72 Gew.%, B₂O₃ < 20 Gew.%, Al₂O₃ <10 Gew.%, Na₂O < 18 Gew.%, K₂O < 15 Gew.%, Li₂O < 5 Gew.% und F ≤ 1 Gew.% und gegebenenfalls Läutermittel in den üblichen Mengen.

Eine bevorzugte Ausführungsform weist Li₂O < 2 Gew.%, F < 0,02 Gew.% auf.

Somit wird eine Stufenfaser für ein Glasfaserkabel bereitgestellt, welche eine bessere chemische Beständigkeit aufweist als die erstgenannte Materialzusammensetzung. Jedoch neigt diese Materialzusammensetzung beim Herstellen mittels Faserziehen eher zur Kristallisation. Je nach vorgesehenem Einsatzbereich kann somit eine der beiden erfindungsgemäßen alternativen für die Herstellung des Glasfaserkabels ausgewählt werden.

Eine vorteilhafte Variante der Stufenfaser ist erfindungsgemäß dadurch gefunden worden, dass das Kernglas der Stufenfasern eine Materialzusammensetzung aufweist mit SiO₂ von 54 bis 60 Gew.%, ZnO von 20 bis 25 Gew.%, Na₂O < 14 Gew.%, K₂O < 12 Gew.%, Na₂O+K₂O ≥ 2 Gew.%, BaO < 0,9 Gew.% und gegebenenfalls Läutermittel in den üblichen Mengen.

Für die erfindungsgemäß vorgeschlagenen Materialzusammensetzungen ist des Weiteren in vorteilhafter Weise vorgesehen, dass das Kernglas der Stufenfaser zusätzlich Li₂O < 5 Gew.% und/oder Al₂O₃ < 5 Gew.% beinhaltet. Bevorzugte Ausführungsformen weisen Li₂O < 1 Gew.% und/oder Al₂O₃ < 2 Gew.% auf.

Des Weiteren ist für die erfindungsgemäß vorgeschlagenen Materialzusammensetzungen in vorteilhafter Weise vorgesehen, dass das Mantelglas der Stufenfasern eine Materialzusammensetzung aufweist mit den Komponenten SiO₂ von 72-78 Gew.%, vorzugsweise 72,5-75 Gew.%, B₂O₃ von 5 bis 15 Gew.%, vorzugsweise 8-12 Gew.%, Al₂O₃ von 5 bis 10 Gew.%, Na₂O < 10 Gew.%, vorzugsweise 5-10 Gew.%, K₂O < 10 Gew.%, vorzugsweise 1-4 Gew.%, Li₂O < 5 Gew.%, vorzugsweise < 2 Gew.%, F ≤ 1 Gew.%, vorzugsweise < 0,02 Gew.%. Dabei weist eine bevorzugte Variante der Stufenfaser eine Materialzusammensetzung auf von SiO₂ von 72,5-75 Gew.%, B₂O₃von 8-12 Gew.%, Al₂O₃ von 5 bis 10 Gew.%, Na₂O von 5-10 Gew.%, K₂O 1-4 Gew.%, Li₂O < 2 Gew.% und F < 0,02 Gew.%.

Des Weiteren ist erfindungsgemäß in vorteilhafter Weise vorgesehen, dass das Mantelglas der Stufenfasern eine Materialzusammensetzung aufweist mit zusätzlichen Anteilen einer oder mehrerer der folgenden Komponenten: MgO < 3 Gew.%, BaO < 3 Gew.%, SrO < 4 Gew.%, CaO < 6 Gew.%, TiO₂< 3 Gew.%, ZnO < 3 Gew.%, Rb₂O < 15 Gew.%, Cs₂O < 15 Gew.%. Von besonderem Vorteil hat sich dabei eine Materialzusammensetzung erwiesen mit einem Anteil an ZnO ≤ 1,5 Gew.%, wobei bei einer ersten bevorzugten Variante eine Materialzusammensetzung mit einem Anteil an ZnO von 0,6 Gew.% und bei einer zweiten bevorzugten Variante eine Materialzusammensetzung mit einem Anteil an ZnO von 1 Gew.% vorgesehen ist. In vorteilhafter Weise werden Materialzusammensetzungen mit einem Anteil an TiO₂ < 1 Gew.% eingesetzt. Auch weil Rb und Cs teure Rohstoffe sind, werden sie bevorzugt in den Bereichen Rb₂O < 5 Gew.% und Cs₂O < 5 Gew.% eingesetzt.

Des Weiteren ist vorgesehen, dass das Mantelglas der Stufenfasern eine Materialzusammensetzung aufweist, wobei die Summe der Komponenten Li₂O, Na₂O, K₂O, Rb₂O, Cs₂O > 5 Gew.% ist.

Außerdem ist erfindungsgemäß vorgesehen, dass das Mantelglas der Stufenfasern eine Materialzusammensetzung aufweist, wobei die Summe der Komponenten MgO, CaO, SrO, BaO, ZnO ≤ 4 Gew.% ist.

Des Weiteren ist erfindungsgemäß als vorteilhaft gefunden worden, dass das Mantelglas der Stufenfasern eine Materialzusammensetzung aufweist mit den Komponenten SiO₂ von 70-80 Gew.%, B₂O₃ < 5 Gew.%, Al₂O₃ < 10 Gew.%, La₂O₃ < 2 Gew.%, Na₂O < 10 Gew.%, K₂O < 10 Gew.%, ZrO₂ < 2 Gew.%.

Eine alternative Ausführungsform wir dadurch bereitgestellt, dass das Mantelglas der Stufenfasern eine Materialzusammensetzung aufweist mit zusätzlichen Anteilen einer oder mehrerer der folgenden Komponenten MgO < 10 Gew.%, BaO < 2 Gew.%, CaO < 2 Gew.%, ZnO < 2 Gew.%. Dabei wird eine Ausführungsvariante mit Zn0 ≤ 1 Gew.% bevorzugt.

Aufgrund der besseren chemischen Beständigkeit des erfindungsgemäßen Mantelglases wird die mechanische Festigkeit der Einzelfasern verbessert, so dass mit der so hergestellten Stufenfaser ein langlebiges Glasfaserkabel zur Verfügung gestellt werden kann.

Mit dieser Materialzusammensetzung steht ein Fasertyp zur Verfügung, dessen optisches Verhalten insbesondere in feuchter Wärme, vor allem jedoch in wechselndem Umgebungsklima, gleichbleibend gut ist. Somit werden die Anforderungen an Datenkabel beispielsweise für den Einsatz in Kraftfahrzeugen ohne weiteres erfüllt.

Die günstigen Eigenschaften hinsichtlich der klimarelevanten Materialveränderungen werden dadurch erreicht, dass das Mantelglas der Einzelfaser Feuchtigkeit ausgesetzt werden kann, ohne dass es durch die Feuchtigkeit zu Erosionserscheinungen oder einem "Auslaugen" des Mantelglases kommt. Weiterhin wird erreicht, dass die optischen Eigenschaften des Mantelglases gegenüber dem Kernglas unbeeinträchtigt bleiben, so dass auch die Eigenschaften hinsichtlich der Totalreflexion in der Einzelfaser erhalten bleiben. Außerdem wird so vermieden, dass mechanische Vorspannungen der Einzelfasern abgebaut werden und dass die Einzelfasern somit brüchig werden. Damit kann Faserbruch vermieden werden, was die Transmission von Licht im Glasfaserkabel beeinträchtigen würde.

Es ist mit der Erfindung erkannt worden, dass bestimmte Materialzusammensetzungen des Mantelglases für bestimmte Kunststoffummantelungen ungeeignet sind. Andererseits korrespondieren bestimmte Materialzusammensetzungen der Kerngläser beim Faserziehen nicht mit jeder Materialzusammensetzung der Mantelgläser. Diese unerwünschten Wirkungen werden mit den erfindungsgemäß zur Verfügung gestellten Kern- und Mantelglaskombinationen überwunden.

Im Übrigen kann das Mantelglas Läutermittel in den üblichen Mengen enthalten. Hierfür ist vorgesehen, dass das Mantelglas die Läuterungsmittel As₂O₃, Sb₂O₃ und/oder SnO₂ in den üblichen Mengen enthält.

Von besonderem Vorteil hat sich eine Materialzusammensetzung erwiesen mit einem Anteil an F < 2 Gew.%, wobei bei einer bevorzugten Variante eine Materialzusammensetzung mit einem Anteil an F < 0,5 Gew.% vorgesehen ist.

Um die erfindungsgemäßen Eigenschaften der Einzelfasern zu gewährleisten, wird die Kombination des erfindungsgemäßen Mantelglases mit einem Kernglas dahingehend vorgeschlagen, dass das Kernglas der Stufenfasern eine Materialzusammensetzung aufweist mit zusätzlichen Anteilen einer oder mehrerer der folgenden Komponenten ZrO₂ < 2 Gew.%, MgO < 6 Gew.%, CaO < 5 Gew.%, SrO < 6 Gew.%, B₂O₃ < 1 Gew.%.

Vorteilhafte weitere Kombinationen des erfindungsgemäßen Mantelglases mit einem Kernglas wird dahingehend vorgeschlagen, dass das Kernglas der Stufenfasern eine Materialzusammensetzung aufweist mit zusätzlichen Anteilen einer oder mehrerer der folgenden Komponenten ZrO₂ < 5 Gew.%, MgO < 1 Gew.%, CaO < 1 Gew.%.

Erfindungsgemäß ist vorgesehen, dass das Kernglas eine Materialzusammensetzung mit Transmissionsfähigkeit der daraus hergestellten Einzelfaser mit zumindest einer Dämpfung von D(650 nm) ≤ 300 dB/km, vorzugsweise D(650 nm) ≤ 200 dB/km. Generell kann zur Datenübertragung Licht oder generell elektromagnetische Strahlung beliebiger Wellenlänge verwendet werden. Daher ist der Begriff "Licht" im Rahmen der vorliegenden Anmeldung als elektromagnetische Strahlung im generellen zu verstehen.

Die Materialzusammensetzung für das Kernglas hat als Einzelfaser somit eine ausreichend niedrige Dämpfung in Abhängigkeit von der Reinheit der verwendeten Rohstoffe. Dies wird mit der erfindungsgemäßen Materialzusammensetzung gewährleistet, welche eine Dämpfung von D(650 nm) ≤ 300 dB/km, vorzugsweise D(650 nm) < 200 dB/km aufweist. Das Kernglas ist günstig herzustellen. Bei der Herstellung zeichnet es sich darüber hinaus durch eine gute Ziehbarkeit aus und es besteht weitgehend aus umweltschonenden Rohstoffkomponenten.Erfindungsgemäß ist vorgesehen, dass das Kernglas einzelner der vorgeschlagenen Materialzusammensetzungen mit Transmissionsfähigkeit der daraus hergestellten Einzelfaser zumindest einer Numerischen Apertur NA ≥ 0,48 aufweist. Die Materialzusammensetzung für das Kernglas hat als Einzelfaser somit eine ausreichend große Numerische Apertur. Der zur numerischen Apertur NA korrelierende Akzeptanzwinkel für Fasern mit den erfindungsgemäßen Kerngläsern liegt für die in der Tabelle angegebenen Materialzusammensetzungen zwischen 44° und ca. 58°.

Es hat sich erwiesen, dass die mit der erfindungsgemäßen Materialzusammensetzungen hergestellten Einzelfasern verbesserte mechanische Gesamtfestigkeit und weniger Schwachstellen aufweisen. Außerdem können die Einzelfasern mit geringeren Kosten hergestellt werden.

Das erfindungsgemäße Glasfaserkabel kann sowohl als optischer Lichtleiter für das gesamte Anwendungsspektrum faseroptischer Anwendungen eingesetzt werden, beispielsweise als Lichtleiter im Bereich der Beleuchtungstechnik beinhaltend Beleuchtungsanwendungen aller Art, sowie als Datenkabel, vorzugsweise jeweils in der Gebäude-, Industrie-, Kraftwerks-, Medizin-, Fahrzeug-, Schifffahrts-, Flugzeug- und Weltraumtechnik.

Die Erfindung betrifft des Weiteren ein Glasfaserkabel zur Leitung von elektromagnetischer Strahlung mit wenigstens einem Bündel von Einzelfasern, welches in einer Kunststoffummantelung aufgenommen ist, wobei die Einzelfasern aus optischen Stufenfasern nach mindestens einem der vorstehenden Ansprüche gebildet werden und wobei die Kunststoffummantelung bei Kontakt mit haushalts- und in KFZ üblichen Umgebungschemikalien, wie Ölen, Fetten, Laugen, Säuren (insbesondere Batteriesäure), Bremsflüssigkeit, PVC, Kraftstoffen sowie daraus entstehenden Flüssigkeiten oder Gasen undurchlässig und chemisch beständig ist.

Somit wird hohe Materialbeständigkeit von Mantelglas und Kunststoffummantelung im Kraftfahrzeug gewährleistet vorzugsweise bei Datenkabeln. Außerdem wird neben geringer Wasserdampfpermeabilität auch ein Schutz der Glasfasern vor sonstigen Umweltchemikalien erreicht. Es wird somit ein Glasfaserkabel zur Verfügung gestellt, das ohne weiteres in dementsprechender Umgebung einsetzbar ist, wie in Kraftwerken, Fahrzeugen, Raumfahrzeugen, Raumsonden, Satelliten, Flugzeugen, Schiffen, Schienenfahrzeugen, Zügen und dergleichen.

Mit der Erfindung ist wie vorerwähnt gefunden worden, dass schädigende Stoffe, insbesondere auch Wasserdampf aus der Umgebung des Kabels, aber darüber hinaus auch bestimmte Stoffe aus der Kunststoffummantelung selbst, dem Mantelglas schaden können. Erfindungsgemäß ist daher vorgesehen, dass die Kunststoffummantelung aus einem Material hergestellt ist, welches eine vernachlässigbar geringe Eigenausdünstung von Kunststoffadditiven und/oder Restmonomerbildung aufweist. Es wird damit vermieden, dass schädigende Einwirkungen auf die Oberfläche des Mantelglases der Stufenfasern durch radikale chemische Elemente beziehungsweise Verbindungen der Kunststoffummantelung selbst zu einer unerwünschten Veränderung des Glasfaserkabels führen. Alternativ beziehungsweise optional kann auch eine Kunststoffart eingesetzt werden, welche ausschließlich eine geringe Eigenausdünstung oder Restmonomerbildung aufweist.

Erfindungsgemäß werden Kombinationen von Mantelglas und Kunststoffen bereitgestellt. Diese Kunststoffe stellen für den Extrusionsprozess geeignete Materialen für die Kabelummantelung dar. Dies wird dadurch erreicht, dass die Kunststoffummantelung ein Polymermaterial ist, mit einer Reißdehnung größer 10%, welches eine Festigkeit von Shore 60A bis Shore 80D aufweist.

Erfindungsgemäß wird hierzu vorgeschlagen, dass die Kunststoffummantelung aus einem Material besteht mit einem oder mehreren der folgenden Kunststoffe: Fluorpolymere, vorzugsweise PVDF, FEP, ETFE; thermoplastische Elastomere auf Basis von Olefinen, vernetzten Olefinen und/oder Kautschuken; Thermoplaste, vorzugsweise PVC, PE, PP, PA, PBT; Copolyester; Urethane; Polyester; Polyamide und/oder Polyetheramide. Diese Materialien können alleine sowohl als Blends, als auch gefüllt eingesetzt werden. Die Kabelummantelung ist erfindungsgemäß sowohl einschichtig als auch mehrschichtig aufgebaut, vorgesehen.

Erfindungsgemäß ist eine Kombination von Mantelglas und Kunststoffzusammensetzung dadurch vorgesehen, dass die Kunststoffummantelung ein thermoplastisches Polyurethan-Elastomer oder ein vernetztes thermoplastisches Elastomer ist, vorzugsweise Polyvinylidenfluorid (PVDF), ein thermoplastisches Urethan (TPE-U), ein Polypropylen-Copolymer (TPE-0) oder ein Polyolifin-Kautschuk-Compounds (TPE-V).

Mit den gefundenen Kunststoffen wird erreicht, dass die Kunststoffummantelung und das Mantelglas sich zueinander chemisch inaktiv verhalten. Die Kunststoffummantelung weist eine hohe Dauertemperaturbeständigkeit, etwa im Bereich von +125°C über 6000 Stunden, eine hohe Temperaturwechselbeständigkeit von etwa -40°C bis +125°C über 3000 Stunden und eine hohe Beständigkeit gegen feuchte Wärme bei +85°C und 85% relativer Feuchte über 3000 Stunden auf.

Des Weiteren weist die Kunststoffummantelung die vorgeschriebene Flammwidrigkeit, chemische Resistenz gegen die typischen Umgebungschemikalien in einem Kraftfahrzeug sowie optimale kleine Biegeradien bis etwa 5mm ohne wesentlichen Anstieg der optischen Dämpfung des Kernglases auf.

Des Weiteren spalten die erfindungsgemäßen Kunststoffe, Restmonomeranteile und Additive wie z.B. Flammschutzmittel, keine oder nur ausreichend geringe Mengen an säuren oder alkalischen Komponenten ab, was insbesondere in hoher Luftfeuchte und in Kombination mit hohen Temperaturen bei üblichen Kunststoffen im Kraftfahrzeugbau der Fall sein kann.

Eine weitere Verbesserung der erforderlichen Resistenz des Glasfaserkabels wird erfindungsgemäß dadurch bereitgestellt, dass das Glasfaserbündel in der Kunststoffummantelung mit einem hydrophoben Schlichtemittel benetzt ist. Damit wird zwischen der Kunststoffummantelung und der Mantelglasoberfläche ein Schutzfilm aufgebaut, durch den eine Beaufschlagung der Mantelglasoberfläche mit Wasserdampf beziehungsweise mit wassergelösten Radikalen vermieden wird.

Erfindungsgemäß wird dabei vorgeschlagen, dass das Schlichtemittel einen oder mehrere der folgenden Bestandteile aufweist: n-fache Carbonsäuren (Cₙ; n>12), sogenannte langkettige Carbonsäuren; ethoxilierte Fettsäureaminoamide; modifizierte Organosilane; fluoralkylfunktionelle Silane; Perfluorpolyether; Kondensate aus Polyethyleniminen sowie deren Salze; Silikonöl. Die gefundenen Schlichtemittel sind weitgehend chemisch neutral und weisen optimale Gleit- und Benetzungseigenschaften auf. Darüber hinaus sind sie äußerst wasserabweisend beziehungsweise wasserdampfabweisend (hydrophob).

In vorteilhafter Weise wird mit dem erfindungsgemäßen Glasfaserkabel ein Datenkabel mit ausreichend guter Lichtleitfähigkeit zur Verfügung gestellt, welches insbesondere eine niedrige Dämpfung aufweist, welche für eine optimale Datenübertragung erforderlich ist und welches für den Einsatz in Umgebungen mit aggressiven Substanzen geeignet ist. Dabei sind Kerngläser in Kombination mit entsprechenden Materialzusammensetzungen für Mantelgläser gefunden worden, beispielsweise entsprechend der Offenbarung in den eingangs eingeführten Druckschriften.

Eine weitere erfindungsgemäße Ausführungsform des Glasfaserkabels wird dadurch bereitgestellt, dass das Mantelglas der Stufenfasern eine Materialzusammensetzung aufweist mit den Komponenten SiO₂ von 70-80 Gew.%, B₂O₃ < 5 Gew.%, Al₂O₃ < 10 Gew.%, La₂O₃ < 2 Gew.%, Na₂O < 10 Gew.%, K₂O < 10 Gew.%, ZrO₂ < 2 Gew.%.

Dabei ist erfindungsgemäß außerdem vorgesehen, dass das Mantelglas der Stufenfasern eine Materialzusammensetzung aufweist mit zusätzlichen Anteilen einer oder mehrerer der folgenden Komponenten: MgO < 10 Gew.%, BaO < 2 Gew.%, CaO < 2 Gew.%, ZnO < 2 Gew.%, vorzugsweise ZnO ≤ 1 Gew.%.

Die gefundenen Stufenfasern weisen während des Faserziehprozesses eine hohe chemische Resistenz von Mantelglas und Kernglas auf, so dass Kristallisation und Grenzflächenreaktionen vermieden werden. Das Kernglas weist eine hohe Transmissionsfähigkeit mit optimaler Reflexionsfähigkeit an der Grenze zwischen Kern- und Mantelglas auf und die Dämpfung ist gering. Darüber hinaus korrespondiert das Mantelglas in vorteilhafter Weise mit den gefundenen Kunststoffummantelungen. Das Glasfaserdatenkabel gemäß dieser Erfindung weist gegenüber Kunststofffasern Temperaturbeständigkeiten auf, welche im Bereich von mindestens 125°C bis zu 150°C liegen.

Von der Erfindung sind darüber hinaus Einzelfasern mit weiteren Materialzusammensetzungen umfasst, welche beim Faserziehen der Einzelfasern geringe Kristallisationsneigung an den Grenzflächen zwischen Kern- und Mantelglas aufweisen, wobei die Kunststoffummantelung mit dem Mantelglas in erfindungsgemäßer Weise korrespondiert.

In vorteilhafter Weise wird mit der Erfindung des Weiteren dadurch eine Ausführungsform eines Glasfaserkabels bereitgestellt, dass das Bündel von Einzelfasern an den Enden heißverschmolzen oder verklebt ist beziehungsweise mit vercrimpten Endabschlüssen versehen ist. Es ist dabei vorgesehen, dass auch Kombinationen der vorgenannten Endabschlüsse oder Endflächen an einem Glasfaserkabel verwirklicht sind. Dabei ist außerdem erfindungsgemäß vorgesehen, dass die Endflächen einen optisch aktiven Bereich mit einem Durchmesser von 0,3 bis 2,0 mm aufweisen, vorzugsweise 1,0 mm. Weiter ist vorgesehen, dass die Einzelfasern einen Durchmesser von 30 bis 150 µm aufweisen, vorzugsweise einen Durchmesser von 53 µm mit einer Abweichungstoleranz von 4 µm. Des Weiteren ist vorgesehen, dass der Kabeldurchmesser insgesamt zwischen 1 und 5 mm beträgt, vorzugsweise 2,3 mm. Damit wird ein Glasfaserkabel bereitgestellt, welches flexibel verlegbar ist, da es kleine Biegeradien realisiert. Insbesondere im Kraftfahrzeugbau kann das Glasfaserkabel mit Mindestbiegeradien von etwa 5 mm einfach eingebaut werden. Das Glasfaserkabel kann mit einer Anzahl von Einzelfasern zwischen 50 und 2000 Einzelfasern hergestellt werden, ohne dass die vorteilhaften Eigenschaften des Datenkabels beeinträchtigt werden und das Bündel ausreichend mechanische Festigkeit aufweist. Das Bündel aus Einzelfasern ist dazu in einer Kunststoffummantelung aus einem der vorgeschlagenen Kunststoffe aufgenommen, vorzugsweise TPE-V.

Weitere erfindungsgemäße Ausführungsformen des Glasfaserkabels sind anhand der nachfolgenden Tabelle 1 für die Materialzusammensetzungen von Mantelgläsern und Tabelle 2 für die Materialzusammensetzungen von Kerngläsern entnehmbar. Die entsprechenden Kern- und Mantelgläser sind dabei frei kombinierbar.

Die erfindungsgemäßen Glasfaserkabel werden bevorzugt für Beleuchtungsanwendungen oder Datenübertragungsanwendungen insbesondere jeweils in der Gebäude- oder Industrie- oder Kraftwerks- oder Medizin- oder Fahrzeug- oder Schifffahrts- oder Flugzeug- oder Weltraumtechnik verwendet. Besonders bevorzugt können sie für die Datenübertragung in Automobilen oder Motorrädern eingesetzt werden.

In Tabelle 3 werden erfindungsgemäße Kombinationen für Kern- und Mantelgläser anhand von ermittelten Werten für die Dämpfung angegeben. Die angegebenen Ausführungsformen der Gläser sowie die Kombinationen gemäß Tabelle 3 sind beispielhaft und stellen keineswegs eine abschließende Auflistung dar. Weitere vorteilhafte Ausführungsformen der Gläser sowie deren Kombinationen sind von der Erfindung ebenfalls umfasst.

Als besonders vorteilhafte erfindungsgemäße Lösung haben sich Kombinationen von Kernglas 5 und Mantelglas 4 sowie von Kernglas 6 und Mantelglas 3 erwiesen.

**Tabelle 1: Mantelgläser**

| Komponente | Mantelglas 1 [Gew.%] | Mantelglas 2 [Gew.%] | Mantelglas 3 [Gew.%] | Mantelglas 4 [Gew.%] |
|---|---|---|---|---|
| SiO₂ | 67,9 | 68,5 | 73,9 | 69,9 |
| B₂O₃ | 18,5 | 19,0 | 9,6 | 1,0 |
| Li₂O | 0,5 | 0,7 | - | - |
| Na₂O | 6,9 | 0,7 | 6,6 | 12,6 |
| K₂O | - | 7,6 | 2,5 | 3,2 |
| MgO | - | - | - | 2,7 |
| CaO | - | - | 0,6 | 5,1 |
| BaO | - | - | - | 2,1 |
| TiO₂ | - | - | - | 0,1 |
| Al₂O₃ | 5,6 | 2,7 | 6,6 | 4,0 |
| ZnO | 1,0 | 0,6 | - | - |

**Tabelle 2: Kerngläser**

| Komponente | Kernglas 1 [Gew.%] | Kernglas 5 [Gew.%] | Kernglas 6 [Gew.%] |
|---|---|---|---|
| SiO₂ | 47,7 | 50,7 | 57,9 |
| La₂O₃ | 4,2 | 4,7 | - |
| Li₂O | 0,9 | 1,0 | - |
| Na₂O | 7,7 | 8,9 | 9,7 |
| K₂O | 6,2 | 7,6 | 8,0 |
| BaO | 0,8 | 0,9 | 0,8 |
| ZrO₂ | - | - | - |
| ZnO | 32,2 | 25,9 | 21,9 |
| Al₂O₃ | | | 1,5 |
| PbO | - | - | - |

**Tabelle 3: Dämpfung**

| Kernglas nach Tab 2 | | Nr. 5 | Nr. 1 | Nr. 6 | Nr. 6 | Nr. 1 |
|---|---|---|---|---|---|---|
| Mantelglas nach Tab 1 | | Nr. 4 | Nr. 1 | Nr. 3 | Nr. 2 | Nr. 2 |
| | 400 nm | 219 | 281 | 144 | 197 | 251 |
| Faserdämpfung in dB/km gemessen nach DIN 58141 Teil 1 | 450 nm | 245 | 265 | 225 | 255 | 240 |
| | 550 nm | 130 | 145 | 140 | 162 | 117 |
| | 650 nm | 178 | 155 | 171 | 194 | 130 |
| | nm | 208 | 126 | 126 | 148 | 106 |

## Patentansprüche

1. Optische Stufenfasern aus Mehrkomponentenglas mit einem Lanthan-hältigen Kernglas und einem das Kernglas vollständig an seiner Umfangswand umschließenden Mantelglas,
**dadurch gekennzeichnet,**
**dass** das Kernglas der Stufenfasern eine Materialzusammensetzung aufweist mit
| | |
|---|---|
| SiO₂ | von 42 bis 60 Gew.%, |
| ZnO | von 20 bis 38 Gew.%, |
| Na₂O | < 14 Gew.%, |
| K₂O | < 12 Gew.%, |
| Na₂O+K₂O | 2 Gew.%, |
| La₂O₃ | von > 0 bis 10 Gew.% |
| BaO | ≤ 0,9 Gew.% |
und gegebenenfalls Läutermittel in den üblichen Mengen,
und das Mantelglas der Stufenfasern eine Materialzusammensetzung aufweist mit
| | | |
|---|---|---|
| SiO₂ | von 60-72 Gew.%, | |
| B₂O₃ | < 20 Gew.%, | |
| Al₂O₃ | < 10 Gew.%, | |
| Na₂O | < 18 Gew.%, | |
| K₂O | < 15 Gew.%, | |
| Li₂O | < 5 Gew.%, | vorzugsweise < 2 Gew.%, |
| F | ≤ 1 Gew.%, | vorzugsweise < 0,02 Gew.% |
und gegebenenfalls Läutermittel in den üblichen Mengen.

2. Optische Stufenfaser nach Anspruch 1,
**dadurch gekennzeichnet,**
**dass** das Kernglas der Stufenfasern eine Materialzusammensetzung aufweist mit
| | |
|---|---|
| SiO₂ | von 47 bis 51 Gew.%, |
| ZnO | von 25 bis 33 Gew.%, |
| Na₂O | < 10 Gew.%, |
| K₂O | < 8 Gew.%, |
| Na₂O+K₂O | 2 Gew.%, |
| La₂O₃ | von 3 bis 5 Gew.% |
| BaO | < 0,9 Gew.% |
und gegebenenfalls Läutermittel in den üblichen Mengen.

3. Optische Stufenfasern aus Mehrkomponentenglas mit einem Lanthan-freien Kernglas und einem das Kernglas vollständig an seiner Umfangswand umschließenden Mantelglas,
**dadurch gekennzeichnet,**
**dass** das Kernglas der Stufenfasern eine Materialzusammensetzung aufweist mit
| | |
|---|---|
| SiO₂ | von > 53 bis 60 Gew.%, |
| ZnO | von 20 bis 38 Gew.%, |
| Na₂O | < 14 Gew.%, |
| K₂O | < 12 Gew.%, |
| Na₂O+K₂O | ≥ 2 Gew.%, |
| BaO | < 0,9 Gew.% |
und gegebenenfalls Läutermittel in den üblichen Mengen,
und das Mantelglas der Stufenfasern eine Materialzusammensetzung aufweist mit
| | | |
|---|---|---|
| SiO₂ | von 60-72 Gew.%, | |
| B₂O₃ | < 20 Gew.%, | |
| Al₂O₃ | <10 Gew.%, | |
| Na₂O | < 18 Gew.%, | |
| K₂O | < 15 Gew.%, | |
| Li₂O | < 5 Gew.%, | vorzugsweise < 2 Gew.%, |
| F | ≤ 1 Gew.%, | vorzugsweise < 0,02 Gew.% |
und gegebenenfalls Läutermittel in den üblichen Mengen.

4. Optische Stufenfaser nach Anspruch 3,
**dadurch gekennzeichnet,**
**dass** das Kernglas der Stufenfasern eine Materialzusammensetzung aufweist mit
| | |
|---|---|
| SiO₂ | von 54 bis 60 Gew.%, |
| ZnO | von 20 bis 25 Gew.%, |
| Na₂O | < 14 Gew.%, |
| K₂O | < 12 Gew.%, |
| Na₂O+K₂O | ≥ 2 Gew.%, |
| BaO | < 0,9 Gew.% |
und gegebenenfalls Läutermittel in den üblichen Mengen.

5. Optische Stufenfaser nach mindestens einem der Ansprüche 1 bis 4,
**dadurch gekennzeichnet,**
**dass** das Kernglas der Stufenfaser zusätzlich Li₂O < 5 Gew.%, vorzugsweise < 1 Gew.%, und/oder Al₂O₃ < 5 Gew.%, vorzugsweise < 2 Gew.%, beinhaltet.

6. Optische Stufenfasern aus Mehrkomponentenglas mit einem Kernglas und einem das Kernglas vollständig an seiner Umfangswand umschließenden Mantelglas, **dadurch gekennzeichnet,**
**dass** das Mantelglas der Stufenfasern eine Materialzusammensetzung aufweist mit den Komponenten
| | | |
|---|---|---|
| SiO₂ | von 72-78 Gew.%, | vorzugsweise 72,5-75 Gew.%, |
| B₂O₃ | von 5 bis 15 Gew.%, | vorzugsweise 8-12 Gew.%, |
| Al₂O₃ | von 5 bis 10 Gew.%, | |
| Na₂O | < 10 Gew.%, | vorzugsweise 5-10 Gew.%, |
| K₂O | < 10 Gew.%, | vorzugsweise 1-4 Gew.%, |
| Li₂O | < 5 Gew.%, | vorzugsweise < 2 Gew.%, |
| F | ≤ 1 Gew.%, | vorzugsweise < 0,02 Gew.%, |
wobei das Kernglas der Stufenfasern eine der folgenden Materialzusammensetzung aufweist:
| | |
|---|---|
| SiO₂ | von 42 bis 60 Gew.%, |
| ZnO | von 20 bis 38 Gew.%, |
| Na₂O | < 14 Gew.%, |
| K₂O | < 12 Gew.%, |
| Na₂O+K₂O | ≥ 2 Gew.%, |
| La₂O₃ | von > 0 bis 10 Gew.% |
| BaO | ≤ 0,9 Gew.% |
und gegebenenfalls Läutermittel in den üblichen Mengen,
oder
| | |
|---|---|
| SiO₂ | von 47 bis 51 Gew.%, |
| ZnO | von 25 bis 33 Gew.%, |
| Na₂O | < 10 Gew.%, |
| K₂O | < 8 Gew.%, |
| Na₂O+K₂O | ≥ 2 Gew.%, |
| La₂O₃ | von 3 bis 5 Gew.% |
| BaO | < 0,9 Gew.% |
und gegebenenfalls Läutermittel in den üblichen Mengen oder
| | |
|---|---|
| SiO₂ | von > 53 bis 60 Gew.%, |
| ZnO | von 20 bis 38 Gew.%, |
| Na₂O | < 14 Gew.%, |
| K20 | < 12 Gew.%, |
| Na₂O+K₂O | ≥ 2 Gew.%, |
| BaO | < 0,9 Gew.% |
und gegebenenfalls Läutermittel in den üblichen Mengen oder
| | |
|---|---|
| SiO₂ | von 54 bis 60 Gew.%, |
| ZnO | von 20 bis 25 Gew.%, |
| Na₂O | < 14 Gew.%, |
| K₂O | < 12 Gew.%, |
| Na₂O+K₂O | ≥ 2 Gew.%, |
| BaO | < 0,9 Gew.% |
und gegebenenfalls Läutermittel in den üblichen Mengen oder eine der vorgenannten Kernglaszusammensetzungen zusätzlich Li₂O < 5 Gew.%, vorzugsweise < 1 Gew.%, und/oder Al₂O₃ < 5 Gew.%, vorzugsweise < 2 Gew.%, beinhaltet.

7. Optische Stufenfaser nach mindestens einem der Ansprüche 1 bis 6,
**dadurch gekennzeichnet,**
**dass** das Mantelglas der Stufenfasern eine Materialzusammensetzung aufweist mit zusätzlichen Anteilen einer oder mehrerer der folgenden Komponenten:
| | | |
|---|---|---|
| MgO | < 3 Gew.%, | |
| BaO | < 3 Gew.%, | |
| SrO | < 4 Gew.%, | |
| CaO | < 6 Gew.%, | |
| TiO₂ | < 3 Gew.% | vorzugsweise< 1 Gew.% |
| ZnO | < 3 Gew.% | vorzugsweise ≤ 1,5 Gew.% |
| Rb₂O | < 15 Gew.% | vorzugsweise ≤ 5 Gew.% |
| Cs₂O | < 15 Gew.% | vorzugsweise ≤ 5 Gew.%. |

8. Optische Stufenfaser nach Anspruch 7,
**dadurch gekennzeichnet,**
**dass** im Mantelglas die Summe der Komponenten Li₂O, Na₂O, K₂O, Rb₂O, Cs₂O > 5 Gew.% ist.

9. Optische Stufenfaser nach Anspruch 7 und/oder 8,
**dadurch gekennzeichnet,**
**dass** im Mantelglas die Summe der Komponenten MgO, CaO, SrO, BaO, ZnO ≤ 4 Gew.% ist.

10. Optische Stufenfasern aus Mehrkomponentenglas mit einem Kernglas und einem das Kernglas vollständig an seiner Umfangswand umschließenden Mantelglas, **dadurch gekennzeichnet,**
**dass** das Mantelglas der Stufenfasern eine Materialzusammensetzung aufweist mit den Komponenten
| | |
|---|---|
| SiO₂ | von 70-80 Gew.%, |
| B₂O₃ | < 5 Gew.%, |
| Al₂O₃ | < 10 Gew.%, |
| La₂O₃ | < 2 Gew.%, |
| Na₂O | < 10 Gew.%, |
| K₂O | < 10 Gew.%, |
| ZrO₂ | < 2 Gew.% |
wobei das Kernglas der Stufenfasern eine der folgenden Materialzusammensetzung aufweist:
| | |
|---|---|
| SiO₂ | von 42 bis 60 Gew.%, |
| ZnO | von 20 bis 38 Gew.%, |
| Na₂O | < 14 Gew.%, |
| K₂O | < 12 Gew.%, |
| Na₂O+K₂O | ≥ 2 Gew.%, |
| La₂O₃ | von > 0 bis 10 Gew.% |
| BaO | ≤ 0,9 Gew.% |
und gegebenenfalls Läutermittel in den üblichen Mengen, oder
| | |
|---|---|
| SiO₂ | von 47 bis 51 Gew.%, |
| ZnO | von 25 bis 33 Gew.%, |
| Na₂O | < 10 Gew.%, |
| K₂O | < 8 Gew.%, |
| Na₂O+K₂O | ≥ 2 Gew.%, |
| La₂O₃ | von 3 bis 5 Gew.% |
| BaO | < 0,9 Gew.% |
und gegebenenfalls Läutermittel in den üblichen Mengen oder
| | |
|---|---|
| SiO₂ | von > 53 bis 60 Gew.%, |
| ZnO | von 20 bis 38 Gew.%, |
| Na₂O | < 14 Gew.%, |
| K₂O | < 12 Gew.%, |
| Na₂O+K₂O | 2 Gew.%, |
| BaO | < 0,9 Gew.% |
und gegebenenfalls Läutermittel in den üblichen Mengen oder
| | |
|---|---|
| SiO₂ | von 54 bis 60 Gew.%, |
| ZnO | von 20 bis 25 Gew.%, |
| Na₂O | < 14 Gew.%, |
| K₂O | < 12 Gew.%, |
| Na₂O+K₂O | ≥ 2 Gew.%, |
| BaO | < 0,9 Gew.% |
und gegebenenfalls Läutermittel in den üblichen Mengen.

11. Optische Stufenfaser nach Anspruch 10,
**dadurch gekennzeichnet,**
**dass** das Mantelglas der Stufenfasern eine Materialzusammensetzung aufweist mit zusätzlichen Anteilen einer oder mehrerer der folgenden Komponenten:
| | | |
|---|---|---|
| MgO | < 10 Gew.%, | |
| BaO | < 2 Gew.%, | |
| CaO | < 2 Gew.%, | |
| ZnO | < 2 Gew.% | vorzugsweise ≤ 1 Gew.%. |

12. Optische Stufenfaser nach mindestens einem der Ansprüche 1 bis 11,
**dadurch gekennzeichnet,**
**dass** das Kernglas und/oder das Mantelglas als Läutermittel As₂O₃, Sb₂O₃, und/oder SnO₂ enthält.

13. Optische Stufenfaser nach mindestens einem der Ansprüche 1 bis 12,
**dadurch gekennzeichnet,**
**dass** das Kernglas der Stufenfasern eine Materialzusammensetzung aufweist mit einem Anteil an F < 2 Gew.%, vorzugsweise F < 0,5 Gew.%.

14. Optische Stufenfaser nach mindestens einem der Ansprüche 1 bis 13,
**dadurch gekennzeichnet,**
**dass** das Kernglas der Stufenfasern eine Materialzusammensetzung aufweist mit zusätzlichen Anteilen einer oder mehrerer der folgenden Komponenten:
| | |
|---|---|
| ZrO₂ | < 2 Gew.%, |
| MgO | < 6 Gew.%, |
| CaO | < 5 Gew.%, |
| SrO | < 6 Gew.%, |
| B₂O₃ | < 1 Gew.%. |

15. Optische Stufenfaser nach mindestens einem der Ansprüche 1 bis 13,
**dadurch gekennzeichnet,**
**dass** das Kernglas der Stufenfasern eine Materialzusammensetzung aufweist mit zusätzlichen Anteilen einer oder mehrerer der folgenden Komponenten:
| | |
|---|---|
| ZrO₂ | < 5 Gew.%, |
| MgO | < 1 Gew.%, |
| CaO | < 1 Gew.%. |

16. Optische Stufenfaser nach mindestens einem der Ansprüche 1 bis 15,
**dadurch gekennzeichnet,**
**dass** das Kernglas eine Materialzusammensetzung mit der Dämpfung von D(650nm)≤300 dB/km, vorzugsweise D(650nm) ≤200 dB/km aufweist.

17. Glasfaserkabel zur Leitung von elektromagnetischer Strahlung mit wenigstens einem Bündel von Einzelfasern, welches in einer Kunststoffummantelung aufgenommen ist, wobei die Einzelfasern aus optischen Stufenfasern nach mindestens einem der vorstehenden Ansprüche gebildet werden und wobei die Kunststoffummantelung bei Kontakt mit haushalts- und KFZ-üblichen Umgebungschemikalien, wie Ölen, Fetten, Laugen, Säuren (insbesondere Batteriesäure), Bremsflüssigkeit, PVC, Kraftstoffen sowie daraus entstehenden Flüssigkeiten oder Gasen undurchlässig und chemisch beständig ist.

18. Glasfaserkabel nach Anspruch 17, wobei die Kunststoffummantelung aus einem Material hergestellt ist, welches eine vernachlässigbar geringe Eigenausdünstung von Kunststoffadditiven und/oder Restmonomerbildung aufweist.

19. Glasfaserkabel nach mindestens einem der Ansprüche 17 bis 18, wobei die Kunststoffummantelung ein Polymermaterial ist, mit einer Reißdehnung größer 10%, welches eine Festigkeit von Shore 60A bis Shore 80D aufweist.

20. Glasfaserkabel nach mindestens einem der Ansprüche 17 bis 19, wobei die Kunststoffummantelung aus einem Material besteht mit einem oder mehreren der folgenden Kunststoffe:
- Fluorpolymere, vorzugsweise PVDF, FEP, ETFE,
- thermoplastische Elastomere auf Basis von Olefinen, vernetzten Olefinen und/oder Kautschuken,
- Thermoplaste, vorzugsweise PVC, PE, PP, PA, PBT,
sowie Copolyester, Urethane, Polyester, Polyamide und/oder Polyetheramide.

21. Glasfaserkabel nach mindestens einem der Ansprüche 17 bis 20, wobei die Kunststoffummantelung ein thermoplastisches Polyurethan-Elastomer oder ein vernetztes thermoplastisches Elastomer ist, vorzugsweise Polyvinyildenfluorid (PVDF), ein thermoplastisches Urethan (TPE-U), ein Polypropylen-Copolymer (TPE-0) oder ein Polyolifin-Kautschuk-Compounds (TPE-V).

22. Glasfaserkabel nach mindestens einem der Ansprüche 17 bis 21, wobei das Glasfaserbündel in der Kunststoffummantelung mit einem hydrophoben Schlichtemittel benetzt ist.

23. Glasfaserkabel nach mindestens einem der Ansprüche 17 bis 22, wobei das Schlichtemittel einen oder mehreren der folgenden Bestandteile aufweist:
n-fache Carbonsäuren (Cₙ; n>12);
ethoxilierte Fettsäureaminoamide;
modifizierte Organosilane;
fluoralkylfunktionelle Silane;
Perfluorpolyether;
Kondensate aus Polyethyleniminen sowie deren Salze;
Silikonöl.

24. Glasfaserkabel nach mindestens einem der Ansprüche 17 bis 23, wobei das Bündel von Einzelfasern an den Enden heißverschmolzen und/oder verklebt ist und/oder mit vercrimpten Endabschlüssen versehen ist.

25. Glasfaserkabel nach mindestens einem der Ansprüche 17 bis 24, wobei die Endflächen einen optisch aktiven Bereich mit einem Durchmesser von 0,3 bis 2,0 mm aufweisen, vorzugsweise 1,0 mm.

26. Glasfaserkabel nach mindestens einem der Ansprüche 17 bis 25, wobei die Einzelfasern einen Durchmesser von 30 bis 150 µm aufweisen, vorzugsweise einen Durchmesser von 53 µm mit einer Abweichungstoleranz von 4 µm.

27. Glasfaserkabel nach mindestens einem der Ansprüche 17 bis 26, wobei der Kabeldurchmesser insgesamt zwischen 1 und 5 mm beträgt, vorzugsweise 2,3 mm.

28. Verwendung eines Glasfaserkabels nach mindestens einem der vorherstehenden Ansprüche 17 bis 27 für Beleuchtungsanwendungen insbesondere in der Gebäude- oder Industrie- oder Kraftwerks- oder Medizin- oder Fahrzeug- oder Schifffahrts- oder Flugzeug- oder Weltraumtechnik.

29. Verwendung eines Glasfaserkabels nach mindestens einem der vorherstehenden Ansprüche 17 bis 27 für Datenübertragung insbesondere in der Gebäude- oder Industrie- oder Kraftwerks- oder Medizin- oder Fahrzeug- oder Schifffahrts- oder Flugzeug- oder Weltraumtechnik.

30. Verwendung eines Glasfaserkabels nach mindestens einem der vorherstehenden Ansprüche 17 bis 27 für die Datenübertragung in Automobilen oder Motorrädern.

## Claims

1. Optical step-index fibres made of multi-component glass with a lanthanum-containing core glass and a cladding glass which completely encloses the core glass at its circumferential wall,
**characterised in that**
the core glass of the step-index fibres has a material composition of
| | |
|---|---|
| SiO₂ | 42 to 60 % w/w |
| ZnO | 20 to 38 % w/w |
| Na₂O | < 14 % w/w |
| K₂O | < 12 % w/w |
| Na₂O+K₂O | ≥ 2 % w/w |
| La₂O₃ | > 0 to 10 % w/w |
| BaO | ≤ 0.9 % w/w |
and fining agents in the usual quantities, if applicable,
and the cladding glass of the step-index fibres has a material composition of
| | |
|---|---|
| SiO₂ | 60 to 72 % w/w |
| B₂O₃ | < 20 % w/w |
| Al₂O₃ | < 10 % w/w |
| Na₂O | < 18 % w/w |
| K₂O | < 15 % w/w |
| Li₂O | < 5 % w/w, preferably < 2 % w/w |
| F | ≤ 1 % w/w, preferably < 0.02 % w/w |
and fining agents in the usual quantities, if applicable.

2. Optical step-in
dex fibre according to claim 1,
**characterised in that**
the core glass of the step-index fibres has a material composition of
| | |
|---|---|
| SiO₂ | 47 to 51 % w/w |
| ZnO | 25 to 33 % w/w |
| Na₂O | < 10 % w/w |
| K₂O | < 8 % w/w |
| Na₂O+K₂O | ≥ 2 % w/w |
| La₂O₃ | 3 to 5 % w/w |
| BaO | < 0.9 % w/w |
and fining agents in the usual quantities, if applicable.

3. Optical step-index fibres made of multi-component glass with a lanthanum-free core glass and a cladding glass which completely encloses the core glass at its circumferential wall,
**characterised in that**
the core glass of the step-index fibres has a material composition of
| | |
|---|---|
| SiO₂ | > 53 to 60 % w/w |
| ZnO | 20 to 38 % w/w |
| Na₂O | < 14 % w/w |
| K₂O | < 12 % w/w |
| Na₂O+K₂O | ≥ 2 % w/w |
| BaO | < 0.9 % w/w |
and fining agents in the usual quantities, if applicable,
and the cladding glass of the step-index fibres has a material composition of
| | |
|---|---|
| SiO₂ | 60 to 72 % w/w |
| B₂O₃ | < 20 % w/w |
| Al₂O₃ | < 10 % w/w |
| Na₂O | < 18 % w/w |
| K₂O | < 15 % w/w |
| Li₂O | < 5 % w/w, preferably < 2 % w/w |
| F | ≤ 1 % w/w, preferably < 0.02 % w/w |
and fining agents in the usual quantities, if applicable.

4. Optical step-index fibre according to claim 3, **characterised in that**
the core glass of the step-index fibres has a material composition of
| | |
|---|---|
| SiO₂ | 54 to 60 % w/w |
| ZnO | 20 to 25 % w/w |
| Na₂O | < 14 % w/w |
| K₂O | < 12 % w/w |
| Na₂O+K₂O | ≥ 2 % w/w |
| BaO | < 0.9 % w/w |
and fining agents in the usual quantities, if applicable.

5. Optical step-index fibre according to one or more of claims 1 to 4, **characterised in that**
the core glass of the step-index fibre contains in addition Li₂O < 5 % w/w, preferably < 1 % w/w, and/or Al₂O₃ < 5 % w/w, preferably < 2 % w/w.

6. Optical step-index fibres made of multi-component glass with a core glass and a cladding glass which completely encloses the core glass at its circumferential wall,
**characterised in that**
the cladding glass of the step-index fibres has a material composition including the components
| | |
|---|---|
| SiO₂ | 72 to 78 % w/w, preferably 72.5 to 75 % w/w |
| B₂O₃ | 5 to 15 % w/w, preferably 8 to 12 % w/w |
| Al₂O₃ | 5 to 10 % w/w |
| Na₂O | < 10 % w/w, preferably 5 to 10 % w/w |
| K₂O | < 10 % w/w, preferably 1 to 4 % w/w |
| Li₂O | < 5 % w/w, preferably < 2 % w/w |
| F | ≤ 1 % w/w, preferably < 0.02 % w/w, |
the core glass of the step-index fibres having one of the following material compositions:
| | |
|---|---|
| SiO₂ | 42 to 60 % w/w |
| ZnO | 20 to 38 % w/w |
| Na₂O | < 14 % w/w |
| K₂O | < 12 % w/w |
| Na₂O+K₂O | ≥ 2 % w/w |
| La₂O₃ | > 0 to 10 % w/w |
| BaO | ≤ 0.9 % w/w |
and fining agents in the usual quantities, if applicable,
or
| | |
|---|---|
| SiO₂ | 47 to 51 % w/w |
| ZnO | 25 to 33 % w/w |
| Na₂O | < 10 % w/w |
| K₂O | < 8 % w/w |
| Na₂O+K₂O | ≥ 2 % w/w |
| La₂O₃ | 3 to 5 % w/w |
| BaO | < 0.9 % w/w |
and fining agents in the usual quantities, if applicable,
or
| | |
|---|---|
| SiO₂ | > 53 to 60 % w/w |
| ZnO | 20 to 38 % w/w |
| Na₂O | < 14 % w/w |
| K₂O | < 12 % w/w |
| Na₂O+K₂O | ≥ 2 % w/w |
| BaO | < 0.9 % w/w |
and fining agents in the usual quantities, if applicable,
or
| | |
|---|---|
| SiO₂ | 54 to 60 % w/w |
| ZnO | 20 to 25 % w/w |
| Na₂O | < 14 % w/w |
| K₂O | < 12 % w/w |
| Na₂O+K₂O | ≥ 2 % w/w |
| BaO | < 0.9 % w/w |
and fining agents in the usual quantities, if applicable,
or
one of the above core glass compositions contains in addition Li₂O < 5 % w/w, preferably < 1 % w/w, and/or Al₂O₃ < 5 % w/w, preferably < 2 % w/w.

7. Optical step-index fibre according to one or more of claims 1 to 6, **characterised in that**
the cladding glass of the step-index fibres has a material composition with additional amounts of one or more of the following components:
| | |
|---|---|
| MgO | < 3 % w/w |
| BaO | < 3 % w/w |
| SrO | < 4 % w/w |
| CaO | < 6 % w/w |
| TiO₂ | < 3 % w/w, preferably < 1 % w/w |
| ZnO | < 3 % w/w, preferably ≤ 1.5 % w/w |
| Rb₂O | < 15 % w/w, preferably ≤ 5 % w/w |
| Cs₂O | < 15 % w/w, preferably ≤ 5 % w/w. |

8. Optical step-index fibre according to claim 7,
**characterised in that**
the sum of the components Li₂O, Na₂O, K₂O, Rb₂O, Cs₂O in the cladding glass is > 5 % w/w.

9. Optical step-index fibre according to claim 7 and/or,
**characterised in that**
the sum of the components MgO, CaO, SrO, BaO, ZnO is ≤ 4 % w/w.

10. Optical step-index fibres made of multi-component glass with a core glass and a cladding glass which completely encloses the core glass at its circumferential wall,
**characterised in that** the cladding glass of the step-index fibres has a material composition including the components
| | |
|---|---|
| SiO₂ | 70 to 80 % w/w |
| B₂O₃ | < 5 % w/w |
| Al₂O₃ | < 10 % w/w |
| La₂O₃ | < 2 % w/w |
| Na₂O | < 10 % w/w |
| K₂O | < 10 % w/w |
| ZrO₂ | < 2 % w/w |
the core glass of the step-index fibres having one of the following material compositions:
| | |
|---|---|
| SiO₂ | 42 to 60 % w/w |
| ZnO | 20 to 38 % w/w |
| Na₂O | < 14 % w/w |
| K₂O | < 12 % w/w |
| Na₂O+K₂O | ≥ 2 % w/w |
| La₂O₃ | > 0 to 10 % w/w |
| BaO | ≤ 0.9 % w/w |
and fining agents in the usual quantities, if applicable,
or
| | |
|---|---|
| SiO₂ | 47 to 51 % w/w |
| ZnO | 25 to 33 % w/w |
| Na₂O | < 10 % w/w |
| K₂O | < 8 % w/w |
| Na₂O+K₂O | ≥ 2 % w/w |
| La₂O₃ | 3 to 5 % w/w |
| BaO | < 0.9 % w/w |
and fining agents in the usual quantities, if applicable,
or
| | |
|---|---|
| SiO₂ | > 53 to 60 % w/w |
| ZnO | 20 to 38 % w/w |
| Na₂O | < 14 % w/w |
| K₂O | < 12 % w/w |
| Na₂O+K₂O | ≥ 2 % w/w |
| BaO | < 0.9 % w/w |
and fining agents in the usual quantities, if applicable,
or
| | |
|---|---|
| SiO₂ | 54 to 60 % w/w |
| ZnO | 20 to 25 % w/w |
| Na₂O | < 14 % w/w |
| K₂O | < 12 % w/w |
| Na₂O+K₂O | ≥ 2 % w/w |
| BaO | < 0.9 % w/w |
and fining agents in the usual quantities, if applicable.

11. Optical step-index fibre according to claim 10,
**characterised in that**
the cladding glass of the step-index fibres has a material composition with additional amounts of one or more of the following components:
| | |
|---|---|
| MgO | < 10 % w/w |
| BaO | < 2 % w/w |
| CaO | < 2 % w/w |
| ZnO | < 2 % w/w, preferably ≤ 1 % w/w |

12. Optical step-index fibre according to one or more of claims 1 to 11,
**characterised in that**
the core glass and/or the cladding glass contain(s) As₂O₃, Sb₂O₃ and/or SnO₂ as fining agent(s).

13. Optical step-index fibre according to one or more of claims 1 to 12,
**characterised in that**
the core glass of the step-index fibres has a material composition with an amount of F < 2 % w/w, preferably F < 0.5 % w/w.

14. Optical step-index fibre according to one or more of claims 1 to 13,
**characterised in that**
the core glass of the step-index fibres has a material composition with additional amounts of one or more of the following components:
| | |
|---|---|
| ZrO₂ | < 2 % w/w |
| MgO | < 6 % w/w |
| CaO | < 5 % w/w |
| SrO | < 6 % w/w |
| B₂O₃ | < 1 % w/w. |

15. Optical step-index fibre according to one or more of claims 1 to 13,
**characterised in that**
the core glass of the step-index fibres has a material composition with additional amounts of one or more of the following components:
| | |
|---|---|
| ZrO₂ | < 5 % w/w |
| MgO | < 1 % w/w |
| CaO | < 1 % w/w. |

16. Optical step-index fibre according to one or more of claims 1 to 13,
**characterised in that**
the core glass has a material composition with the attenuation of D(650nm) ≤300 dB/km, preferably D(650nm) ≤200 dB/km.

17. Fibre optic cable for conducting electromagnetic radiation, comprising at least one bundle of individual fibres contained in a plastic sheathing, wherein the individual fibres are represented by optical step-index fibres according to one or more of the preceding claims and wherein the plastic sheathing is impermeable and chemically stable at contact with chemicals found in a domestic and motor vehicle environment, such as oils, greases, alkaline solutions, acids (in particular battery acid), brake fluid, PVC, fuels and liquids or gases arising therefrom.

18. Fibre optic cable according to claim 17, wherein the plastic sheathing is made of a material having a negligibly low inherent emission of plastic additives and/or residual monomer formation.

19. Fibre optic cable according to claim 17 and/or 18, wherein the plastic sheathing is a polymer material with an ultimate elongation of more than 10% and having a strength of Shore 60A to shore 80D.

20. Fibre optic cable according to one or more of claims 17 to 19, wherein the plastic sheathing is made of a material containing one or more of the following plastics:
- fluoropolymers, preferably PVDF, FEP, ETFE,
- thermoplastic elastomers based on olefins, crosslinked olefins and/or rubber,
- thermoplastics, preferably PVC, PE, PP, PA, PBT,
- and copolyesters, urethanes, polyesters, polyamides and/or polyether amides.

21. Fibre optic cable according to one or more of claims 17 to 20, wherein the plastic sheathing is a thermoplastic polyurethane elastomer or a crosslinked thermoplastic elastomer, preferably polyvinylidene chloride (PVDF), a thermoplastic urethane (TPE-U), a polypropylene copolymer (TPE-0) or a polyolefin rubber compound (TPE-V).

22. Fibre optic cable according to one or more of claims 17 to 21, wherein the glass fibre bundle in the plastic sheathing is wetted with a hydrophobic sizing means.

23. Fibre optic cable according to one or more of claims 17 to 22, wherein the sizing means comprises one or more of the following components:
n-carboxylic acids (Cₙ; n>12);
ethoxylated fatty acid aminoamides;
modified organosilanes;
fluoroalkyl-functional silanes;
perfluoro-polyether;
condensates from polyethylene imines and their salts;
silicon oil.

24. Fibre optic cable according to one or more of claims 17 to 23, wherein the bundle of individual fibres is hot-fused and/or -bonded and/or provided with crimped terminations.

25. Fibre optic cable according to one or more of claims 17 to 24, wherein the end faces have an optically active area with a diameter of 0.3 to 2.0 mm, preferably 1.0 mm.

26. Fibre optic cable according to one or more of claims 17 to 25, wherein each of the individual fibres has a diameter of 30 to 150 µm, preferably a diameter of 53 µm with a deviation tolerance of 4 µm.

27. Fibre optic cable according to one or more of claims 17 to 26, wherein the cable diameter is 1 to 5 mm, preferably 2.3 mm, in total.

28. Use of a fibre optic cable according to one or more of the preceding claims 17 to 27 for illumination applications, in particular in construction or industrial or power station or medical or vehicle or shipping or aircraft or space technology.

29. Use of a fibre optic cable according to one or more of the preceding claims 17 to 27 for data transmission, in particular in construction or industrial or power station or medical or vehicle or shipping or aircraft or space technology.

30. Use of a fibre optic cable according to one or more of the preceding claims 17 to 27 for data transmission in cars or motorcycles.

## Revendications

1. Fibres optiques à saut d'indice constitué de verre composite comprenant un verre de coeur contenant du lanthane et un verre de gaine renfermant entièrement le verre de coeur sur sa paroi périphérique, **caractérisé en ce que** le verre de coeur des fibres à saut d'indice présente une composition de matériau comprenant
| | |
|---|---|
| Si02 | compris entre 42 et 60 % en poids, |
| ZnO | compris entre 20 et 38 %en poids, |
| Na₂O | < 14 % en poids, |
| K₂O | < 12 % en poids, |
| Na₂O+K₂O | ≥ 2 % en poids, |
| La₂O₃ | de > 0 à 10 % en poids |
| BaO | ≤ 0,9 % en poids |
et si nécessaire un agent d'affinage en quantités habituelles,
et le verre de gaine des fibres à saut d'indice présente une composition de matériau comprenant
| | |
|---|---|
| SiO₂ | compris entre 60 et 72 % en poids, |
| B₂O₃ | < 20 % en poids |
| Al₂O₃ | < 10 % en poids, |
| Na₂O | < 18 % en poids, |
| K20 | < 15 % en poids, |
| Li₂O | < 5 % en poids, de préférence < 2 % en poids, |
| F | ≤ 1 % en poids, de préférence < 0,02 % en poids |
et si nécessaire un agent d'affinage en quantités habituelles

2. Fibre optique à saut d'indice, selon la revendication 1, **caractérisée en ce que** le verre de coeur des fibres à saut d'indice présente une composition de matériau comprenant
| | |
|---|---|
| SiO₂ | compris entre 47 et 51 % en poids, |
| ZnO | compris entre 25 et 33 % en poids, |
| Na₂O | < 10 % en poids |
| K₂O | < 8 % en poids, |
| Na₂O+K₂O | ≥ 2 % en poids, |
| La₂O₃ | compris entre 3 et 5 % en poids, |
| BaO | < 0,9 % en poids, |
et si nécessaire un agent d'affinage en quantités habituelles.

3. Fibres optiques à saut d'indice constituées de verre composite comprenant un verre de coeur sans lanthane et un verre de gaine renfermant entièrement le verre de coeur sur sa paroi périphérique, **caractérisées en ce que** le verre de coeur des fibres optiques à saut d'indice présente une composition de matériau comprenant
| | |
|---|---|
| SiO₂ | compris entre > 53 et 60% en poids, |
| ZnO | compris entre 20 et 38 % en poids, |
| Na₂O | < 14 % en poids, |
| K₂O | < 12 % en poids, |
| Na₂O+K₂O | ≥ 2 % en poids, |
| BaO | < 0,9 % en poids |
et si nécessaire un agent d'affinage en quantités habituelles
et le verre de gaine des fibres à saut d'indice comprenant une composition de matériau comprenant
| | |
|---|---|
| SiO₂ | compris entre 60 et 72% en poids, |
| B₂O₃ | < 20 % en poids, |
| Al₂O₃ | < 10 % en poids |
| Na₂O | < 18 % en poids |
| K₂O | < 15 % en poids |
| Li₂O | < 5 % en poids, de préférence < 2% en poids, |
| F | ≤1 % en poids, de préférence < 0,02 % en poids, |
et si nécessaire un agent d'affinage en quantités habituelles

4. Fibre optique à saut d'indice selon la revendication 3, **caractérisée en ce que**, le verre de coeur des fibres à saut d'indice présente une composition de matériau comprenant
| | |
|---|---|
| SiO₂ | compris entre 54 et 60 % en poids, |
| ZnO | compris entre 20 et 25 % en poids, |
| Na₂O | < 14 % en poids, |
| K₂O | < 12% en poids, |
| Na₂O+K₂O | ≥ 2 % en poids, |
| BaO | < 0,9 % en poids |
et si nécessaire un agent d'affinage en quantités habituelles.

5. Fibre optique à saut d'indice selon au moins l'une quelconque des revendications 1 à 4, **caractérisée en ce que** le verre de coeur des fibres à saut d'indice contient en outre de préférence Li₂O < 5 % en poids, de préférence < 1 % en poids, et/ou Al₂O₃ < 5 % en poids, de préférence < 2 % en poids.

6. Fibres optiques à saut d'indice constituées de verre composite ayant un verre de coeur et une verre de gaine renfermant entièrement le verre de coeur sur sa paroi périphérique, **caractérisées en ce que** le verre de gaine des fibres à saut d'indice comprend une composition de matériau présentant les composés
SiO₂ compris entre 72 et 78 % en poids, de préférence entre 72,5 et 75 % en poids
B₂O₃ compris entre 5 et 15 % en poids, de préférence entre 8 et 12 % en poids,
Al₂O₃ compris entre 5 et 10 % en poids
Na₂O < 10 % en poids, de préférence compris entre 5 et 10 % en poids,
K₂O < 10 % en poids, de préférence compris entre 1 et 4 % en poids,
Li₂O < 5 % en poids, de préférence < 2% en poids,
F ≤ 1 % en poids, de préférence < 0,02 % en poids,
le verre de coeur des fibres à saut d'indice présentant une des compositions de matériau suivantes :
| | |
|---|---|
| SiO₂ | compris entre 42 et 60 % en poids, |
| ZnO | compris entre 20 et 38 % en poids, |
| Na₂O | < 14 % en poids |
| K₂O | < 12 % en poids |
| Na₂O+K₂O | ≥ 2 % en poids |
| La₂O₃ | compris entre > 0 et 10 % en poids, |
| BaO | ≤ 0,9 % en poids, |
et si nécessaire un agent d'affinage en quantité habituelles
ou
| | |
|---|---|
| SiO₂ | compris entre 47 et 51 % en poids, |
| ZnO | compris entre 25et33 % en poids, |
| Na₂O | < 10 % en poids, |
| K₂O | < 8 % en poids |
| Na₂O+K₂O | ≥ 2 % en poids, |
| La₂O₃ | compris entre 3 et 5 % en poids |
| BaO | < 0,9 % en poids |
et si nécessaire un agent d'affinage en quantités habituelles
ou
| | |
|---|---|
| SiO₂ | compris entre > 53 et 60 % en poids, |
| ZnO | compris entre 20 et 38% en poids, |
| Na₂O | < 14 % en poids, |
| K₂O | < 12 % en poids, |
| Na₂O+K₂O | ≥ 2 % en poids, |
| BaO | < 0,9 % en poids |
et si nécessaire un agent d'affinage en quantités habituelles
ou
| | |
|---|---|
| SiO₂ | compris entre 54 et 60 % en poids, |
| ZnO | compris entre 20 et 25 % en poids, |
| Na₂O | < 14 % en poids, |
| K₂O | < 12 % en poids, |
| Na₂O+K₂O | ≥ 2 % en poids, |
| BaO | < 0,9 % en poids |
et si nécessaire un agent d'affinage en quantités habituelles
ou l'une des compositions de verre de coeur susmentionnées comprend en outre Li₂O < 5 % en poids, de préférence < 1 % en poids, et/ou Al₂O₃ < 5 %, de préférence < 2 %en poids.

7. Fibre optique à saut d'indice selon au moins l'une quelconque des revendications 1 à 6, **caractérisée en ce que** le verre de gaine des fibres à saut d'indice présente une composition de matériau, les proportions supplémentaires d'un ou de plusieurs constituants étant les suivants :
| | |
|---|---|
| MgO | < 3 % en poids, |
| BaO | < 3 % en poids, |
| SrO | < 4 % en poids, |
| CaO | < 6 % en poids, |
| TiO₂ | < 3 % en poids, de préférence < 1 % en poids, |
| ZnO | < 3 % en poids, de préférence ≤ 1,5% en poids |
| Rb₂O | < 15 % en poids, de préférence ≤ 5 % en poids, |
| Cs₂O | < 15 % en poids, de préférence ≤ 5 % en poids |

8. Fibre optique à saut d'indice selon la revendication 7, **caractérisée en ce que** dans le verre de gaine la somme des composés est Li₂O, Na₂O, Rb₂O, Cs₂O > 5 % en poids.

9. Fibre optique à saut d'indice selon la revendication 7 et/ou la revendication 8, **caractérisée en ce que** dans le verre de gaine la somme des composés MgO, CaO, SrO, BaO, ZnO ≤ 4 % en poids.

10. Fibres optiques à saut d'indice constituées de verre composite comprenant un verre de coeur et un verre de gaine renfermant entièrement le verre de coeur sur sa paroi périphérique, **caractérisées en ce que** le verre de coeur des fibres à saut d'indice présente une composition de matériau ayant les composés
| | |
|---|---|
| SiO₂ | compris entre 70 et 80 % en poids, |
| B₂O₃ | < 5 % en poids |
| Al₂O₃ | < 10 % en poids, |
| La₂O₃ | < 2 % en poids, |
| Na₂O | < 10 % en poids |
| K₂O | < 10 % en poids |
| ZrO₂ | < 2 % en poids |
le verre de coeur des fibres à saut d'indice présentant l'une des compositions de matériau suivantes :
| | |
|---|---|
| SiO₂ | compris entre 42 et 60 % en poids, |
| ZnO | compris entre 20 et 38 % en poids, |
| Na₂O | < 14 % en poids, |
| K₂O | < 12 % en poids, |
| Na₂O+K₂O | ≥ 2 % en poids, |
| La₂O₃ | compris entre > 0 et 10 % en poids |
| BaO | ≤ 0,9 % en poids |
et si nécessaire un agent d'affinage en quantités habituelles
ou
| | |
|---|---|
| SiO₂ | compris entre 47 et 51 % en poids, |
| ZnO | compris entre 25 et 33 % en poids, |
| Na₂O | < 10 % en poids, |
| K₂O | < 8 % en poids, |
| Na₂O+K₂O | ≥ 2 % en poids, |
| La₂O₃ | compris entre 3 et 5 % en poids |
| BaO | < ·0,9 % en poids |
et si nécessaire un agent d'affinage en quantités habituelles
ou
| | |
|---|---|
| SiO₂ | compris entre 53 et 60 % en poids, |
| ZnO | compris entre 20 et 38% en poids, |
| Na₂O | < 14 % en poids, |
| K₂O | < 12 % en poids, |
| Na₂O+K₂O | ≥ 2 % en poids, |
| BaO | < ·0,9 % en poids |
et si nécessaire un agent d'affinage en quantités habituelles
ou
| | |
|---|---|
| SiO₂ | compris entre 54 et 60 % en poids, |
| ZnO | compris entre 20 et 25 % en poids, |
| Na₂O | < 14 % en poids, |
| K₂O | < 12 % en poids, |
| Na₂O+K₂O | ≥ 2% en poids, |
| BaO | < ·0,9 % en poids |
et si nécessaire un agent d'affinage en quantités habituelle

11. Fibre optique à saut d'indice selon la revendication 10, **caractérisée en ce que** le verre de gaine des fibres à saut d'indice présente une composition de matériau ayant des proportions supplémentaires d'un ou de plusieurs composés suiva nts:
| | |
|---|---|
| MgO | < 10 % en poids, |
| BaO | < 2% en poids, |
| CaO | < 2 % en poids, |
| ZnO | < 2 % en poids de préférence ≤ 1 % en poids |

12. Fibre optique à saut d'indice selon au moins une des revendications 1 à 11, **caractérisées en ce que** le verre de coeur et/ou le verre de gaine contient en tant qu'agent d'affinage As₂O₃, Sb₂O₃, et/ou SnO₂.

13. Fibre optique à saut d'indice selon au moins une des revendications 1 à 12, **caractérisée en ce que** le verre de coeur des fibres à saut d'indice présente une compositions de matériau ayant une proportion de F < 2 % en poids, de préférence F < 0,5 % en poids.

14. Fibre optique des fibres à saut d'indice selon au moins l'une des revendications 1 à 13, **caractérisée en ce que** le verre de coeur des fibres à saut d'indice présente une composition de matériau ayant des proportions supplémentaires d'un ou de plusieurs composés suivants:
| | |
|---|---|
| ZrO₂ | < 2 % en poids, |
| MgO | < 6 % en poids, |
| CaO | < 5 % en poids, |
| SrO | < 6% en poids, |
| B₂O₃ | < 1 % en poids. |

15. Fibre optique à saut d'indice selon au moins une des revendications 1 à 13, **caractérisée en ce que** le verre de coeur des fibres à saut d'indice présente une composition de matériau ayant des proportions supplémentaires d'un ou de plusieurs composés suivants :
| | |
|---|---|
| ZrO₂ | < 5 % en poids, |
| MgO | < 1 % en poids, |
| CaO | < 1 % en poids. |

16. Fibre optique à saut d'indice selon au moins l'une des revendications 1 à 15, **caractérisée en ce que** le verre de coeur présente une composition de matériau ayant une atténuation de D(650 nm) ≤ 300 dB/km, de préférence D(650 nm) ≤ 200 dB/km.

17. Câble de fibre de verre destiné à la conduction d'un rayonnement électromagnétique ayant au moins un faisceau de fibres individuelles, qui est logé dans une enveloppe de plastique, les fibres individuelles étant formées en fibres optiques à saut d'indice selon au moins l'une des revendications précédentes et l'enveloppe en plastique étant chimiquement stables et imperméables lors d'un contact avec des produits chimiques d'environnement classiques KFZ et domestiques comme l'huile, les graisses, les lessives, les acides (en particulier les acides de batterie), le liquide de frein, le PVC, les carburants et les liquides ainsi obtenues ou les gaz.

18. Câble de fibre de verre selon la revendication 17, l'enveloppe en plastique est fabriqué dans un matériau, qui présente une exhalaison propre faible négligeable d'additifs de plastique et/ou de formation résiduelle de monomère.

19. Câble en fibre de verre selon au moins une des revendications 17 à 18, l'enveloppe en plastique est un matériau polymère, ayant un allongement à la rupture supérieur à 10%, qui présente une dureté comprise entre 60 Shore A et 800 Shore D.

20. Câble de fibre de verre selon au moins l'une des revendications 17 à 19, l'enveloppe en plastique étant constituée d'un matériau ayant un ou plusieurs des plastiques suivants :
- fluoropolymère, de préférence PVDF, FEP, ETFE,
- élastomère thermoplastique à base d'oléfines, d'oléfines réticulées et/ou des caoutchoucs,
- thermoplastiques, de préférence PVC, PE, PP, PA, PBT, ainsi que du copolyester, de l'uréthane, du polyester, du polyamide et/ou du polyéthéramide.

21. Câble de fibre de verre selon au moins une des revendications 17 à 20, l'enveloppe en plastique est un polyuréthane-élastomère thermoplastique ou un élastomère thermoplastique réticulé, de préférence un polyfluorure de vinylidène (PVDF), un uréthane thermoplastique (TPE-U), un polypropylène-copolymère (TPE-0) ou des composés de caoutchouc de polyoléfine (TPE-V).

22. Câble de fibre de verre selon au moins une des revendications 17 à21, le faisceau de fibre de verre dans l'enveloppe de plastique est mouillé à l'aide d'un produit d'encollage hydrophobe.

23. Câble de fibre de verre selon au moins une des revendications 17à22, le produit d'encollage présente un ou plusieurs constituants suivants:
n-fois ache acides carboxyliques (Cn; n>12);
aminoamide d'acide gras éthoxilé,
Organosilane modifiés,
fluoro*-alkyl silane* fonctionnelle,
Perfluorpolyéther,
Condensés de polyétherimide et leurs sels
Huile de silicone.

24. Câble de fibre de verre selon au moins l'une des revendications 17 à 23, le faisceau de fibres de verre est collé et/ou fondu à chaud aux extrémités ou est pourvu d'obturateurs d'extrémité sertis.

25. Câble en fibre de verre selon au moins l'une des revendications 17 à 24, les surfaces d'extrémité présentent une zone optique active ayant un diamètre compris entre 0,3 et 2,0 mm, de préférence 1,0 mm.

26. Câble en fibre de verre selon au moins l'une des revendications 17 à 25, les fibres individuelles présentent un diamètre compris entre 30 et 150 µm, de préférence un diamètre de 53 µm avec une tolérance d'écart de 4 µm.

27. Câble en fibre de verre selon au moins l'une des revendications 17 à 26, le diamètre du câble est au total compris entre 1 et 5 mm, de préférence 2,3 mm.

28. Utilisation d'un câble en fibre de verre selon au moins l'une des revendications précédentes 17 à 27 pour des applications d'éclairage en particulier dans l'industrie de la construction ou dans la technique de centrale électrique ou médicale ou automobile ou maritime ou aéronautique ou encore environnementale.

29. Utilisation d'un câble en fibre de verre selon au moins l'une des revendications précédentes 17 à 27 pour la transmission de données en particulier dans l'industrie de la construction ou dans la technique de centrale électrique ou médicale ou automobile ou maritime ou aéronautique ou encore environnementale

30. Utilisation du câble en fibre de verre selon au moins l'une des revendications précédentes 17 à 27 pour la transmission de données dans des automobiles ou des motos.
